# EUROPEAN PATENT APPLICATION

(11) **EP 0 886 278 A1**
(43) Date of publication of application: **23.12.1998**
(21) Application number: 98304674.9
(22) Date of filing: 12.06.1998
(51) Int. Cl.: G11B 33/04

(54) **Disc retainer**

(30) Priority: 17.06.1997 GB 9712536
(71) Applicant: Alpha-Tech Moulding Limited, High Wycombe, Buckinghamshire HP12 4HJ (GB)
(72) Inventor: Cowan, Ian Macfarlane, Sutton Coldfield, West Midlands, B73 6RP (GB)
(74) Representative: Kinton, Colin David

(57) **Abstract**

A disc-retainer, adapted to secure the disc by its circumferential edge against movement in a box or other container, comprises a complementary pair of arcuate locators (11, 12) which define a generally circular aperture (13) to receive a disc (14), disc-engaging means consisting of a rest-member (15) and a clip-member (16) and means such as a leaf-spring (17) to urge the disc (14) into engagement with the clip-member (16).

## Description

This invention relates to a disc-retainer and also to a container for a disc which includes a disc-retainer according to the present invention.

While the present invention will be described herein with particular reference to a disc-retainer for use in connection with digital video discs (DVDs) it is not to be construed as being limited thereto. A disc-retainer according to the present invention may also be used in connection with compact discs (CDs) or the like.

Both CDs and DVDs are provided with a central hole to engage a spindle of a disc-player. Hitherto, containers adapted for the storage of discs have been provided with a clip to engage the central hole of the disc, the clip generally being attached to a surface of the container.

In order to engage the disc on the known clip and to disengage the disc therefrom, it is necessary to flex the disc about its diameter.

Adjacent grooves (channels) of the DVD are much closer to each other than those of a CD and flexing of a DVD is likely to cause damage.

The Applicants have devised a disc-retainer which avoids the above-described disadvantage by providing means, external to the disc, for engaging the disc by its circumferential edge, rather than by the central hole.

Accordingly, the present invention provides a disc-retainer comprising a support-surface, a complementary pair of arcuate locators attached to said support-surface and defining between them a generally circular aperture to receive a disc, disc-engaging means consisting essentially of a rest-member and a clip-member located diametrically opposite each other, together with means to urge the disc into engagement with the clip-member, whereby the disc is secured by its circumferential edge.

Preferably the arcuate locators each comprise an outer portion to retain the disc and an inner portion on which the disc is supported.

The clip-member is suitably provided with a first portion shaped to engage the periphery of a disc and a second portion whereby the clip-member can be disengaged from the disc. Such a second portion may, for example, comprise a lever.

The means to urge the disc into engagement with the clip-member suitably comprises a leaf-spring.

Preferably, one end of the leaf-spring is attached to the support-surface. The opposite end of the leaf-spring contacts the circumferential edge of the disc to urge it into engagement with the clip-member.

Further support-members may be provided and these may conveniently be located on the support-surface within the circular aperture defined by the locators.

The locators, rest-member, clip-member, leaf-spring and further support-members may each be integrally moulded with the support-surface. The support-surface and integral members may therefore be made of a mouldable plastics material, for example polypropylene.

The support-surface may constitute one-half of a box or other container for a disc.

Thus, the present invention also provides a container for a disc which includes a disc-retainer as hereinabove described.

A preferred embodiment of the present invention will be illustrated, merely by way of example, in the following description and with reference to the accompanying drawings.

In the drawings (wherein like numerals denote like parts):
**Figure 1** is a plan view of a disc-retainer according to the present invention;
**Figure 2** is a side view of the disc-retainer shown in Figure 1;
**Figure 3** is a section on line III-III in Figure 1; and
**Figure 4** is a section on line IV-IV in Figure 1.
Referring to Figures 1 to 3, a support-surface 10 has attached thereto (for example by moulding) a complementary pair of arcuate locators 11 and 12. The locators define between them a generally circular aperture 13 to receive a disc 14.

The disc is secured around its circumference by engagement with a stepped rest-member 15, a clip-member 16 diametrically-opposite thereto, and the locators 11 and 12, all of which are attached (for example by moulding) to the support-surface 10.

A leaf-spring 17 (likewise attached by one end to the support-surface 10) urges the disc 14 against the face 16A of clip-member 16.

Clip-member 16 includes a lever portion 16B which, when depressed, releases the circumference of the disc from engagement with face 16A. The action of the leaf-spring 17 pushes the disc clear of the locators and enables its removal.

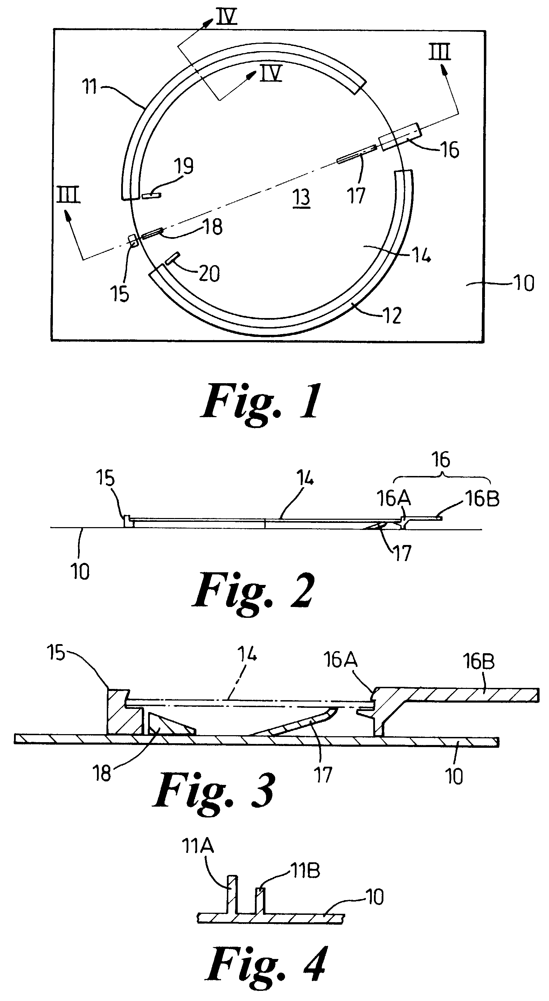

As shown in Figure 4, locator 11 comprises an outer portion 11A to retain the disc and an inner portion 11B on which the disc is supported. (Locator 12 corresponds).

Further support-members (three are shown at 18, 19 and 20) may be provided for enhancing the stability of the disc when engaged in the disc-retainer of the present invention.

Suitably, the support-surface 10 constitutes one-half of a box or other container for a disc. Support-surface 10, therefore, may conveniently be hingedly attached to a complementary "lid". The lid may, for example, be made of a mouldable plastics material and may be provided with clips, recesses or the like (for example to contain a brochure or instruction leaflet).

## Claims

1. A disc-retainer, **characterised by** a support-surface (10), a complementary pair of arcuate locators (11, 12) attached to said support-surface (10) and defining between them a generally circular aperture (13) to receive a disc (14), disc-engaging means consisting essentially of a rest-member (15) and a clip-member (16) located diametrically opposite said rest-member (15), together with means to urge the disc (14) into engagement with the clip-member (16), whereby the disc is secured by its circumferential edge.

2. A disc-retainer according to Claim 1, **characterised in that** each arcuate locator (11, 12) comprises an outer portion (11A) to retain the disc (14) and an inner portion (11B) on which the disc (14) is supported.

3. A disc-retainer according to Claim 1 or 2, **characterised in that** the clip-member (16) comprises a first portion (16A) shaped to engage the periphery of the disc (14) and a second portion (e.g. a lever 16B) whereby the clip-member (16) can be disengaged from the disc (14).

4. A disc-retainer according to any one of Claims 1 to 3, **characterised in that** the means to urge the disc (14) into engagement with the clip-member (16) comprises a leaf-spring (17).

5. A disc-retainer according to Claim 4, **characterised in that** one end of the leaf-spring (17) is attached to the support-surface (10) and the opposite end of the leaf-spring (17) contacts the disc (14) to urge the disc into engagement with the clip-member (16).

6. A disc-retainer according to any one of Claims 1 to 5, **characterised in that** further support-members (18, 19, 20) are located on the support-surface (10) within the aperture (13) defined by the locators (11, 12).

7. A disc-retainer according to any one of Claims 1 to 6, **characterised in that** the locators (11, 12), the rest-member (15), the clip-member (16), the leaf-spring (17) and the further support-members (18, 19, 20) are integrally moulded with the support-surface (10).

8. A disc-retainer according to Claim 7, **characterised in that** the support-surface (10) and the integral members (11, 12, 15, 16, 17, 18, 19, 20) are made of a mouldable plastics material (e.g. polypropylene).

9. A disc-retainer according to any one of Claims 1 to 8, **characterised in that** the support-surface (10) comprises one half of a box or other container for the disc (14).

10. A box or other container for a disc, **characterised in that** the box includes a disc-retainer according to any one of Claims 1 to 9.
